# EUROPEAN PATENT APPLICATION

(11) **EP 4 836 014 A1**
(43) Date of publication of application: **04.11.2026**
(21) Application number: 25867322.7
(22) Date of filing: 07.11.2025
(51) Int. Cl.: H01M 4/58, H01M 10/052, H01M 4/136, H01M 4/36, H01M 4/62, C01B 25/45, C01B 32/15, B82Y 30/00, B82Y 40/00

(54) **LITHIUM IRON PHOSPHATE POSITIVE ELECTRODE MATERIAL AND PREPARATION METHOD THEREFOR, POSITIVE ELECTRODE SHEET, AND LITHIUM BATTERY**

(30) Priority: 12.03.2025 CN 202510287890
(71) Applicant: Guangdong Brunp Recycling Technology Co., Ltd., Foshan, Guangdong 528137 (CN)
(72) Inventor: LI, Changdong, Foshan, Guangdong 528137 (CN); CUI, Fan, Foshan, Guangdong 528137 (CN); HUANG, Weiyan, Foshan, Guangdong 528137 (CN); WANG, Tao, Foshan, Guangdong 528137 (CN); XIE, Yinghao, Foshan, Guangdong 528137 (CN); YU, Haijun, Foshan, Guangdong 528137 (CN)
(74) Representative: Westphal, Mussgnug & Partner, Patentanwälte mbB
(86) International application number: PCT/CN2025/133388
(87) International publication number: WO 2026/188821

(57) **Abstract**

The present disclosure relates to the technical field of lithium-ion batteries, and provides a lithium iron phosphate cathode material and a preparation method thereof, a cathode sheet, and a lithium-ion battery. By regulating the crystal structure of lithium iron phosphate cathode material, a lithium iron phosphate cathode material with a crystal structure parameter α satisfying 0.15nm⁻¹≤α≤4.5nm⁻¹ is obtained. The lithium iron phosphate cathode material has a lower reaction activation energy for deintercalation and intercalation of lithium ions, resulting in a high diffusion rate of lithium ions and thus excellent electrode reaction kinetics. The corresponding lithium-ion battery features excellent rate performance, low-temperature performance, and low polarization degree.

## Description

### TECHNICAL FIELD

The present disclosure relates to the technical field of lithium-ion batteries, and in particular to a lithium iron phosphate cathode material and a preparation method thereof, a cathode sheet and a lithium-ion battery.

### BACKGROUND

Lithium iron phosphate (LiFePO₄, LFP) is an important cathode material for lithium-ion batteries, which stands out among numerous application fields due to its advantages of excellent safety, long cycle life, and low cost. Lithium iron phosphate is composed of PO₄ tetrahedron, LiO₆ octahedron, and FeO₆ octahedron which are connected by sharing edges and arranged alternately to form a stable crystal structure to adapt to the repeated intercalation and deintercalation of lithium ions over extended periods. However, this stable crystal structure hinders the transport of Li⁺, causing Li⁺ to typically intercalate/deintercalate along a one-dimensional direction within the lithium iron phosphate crystal. The presence of iron-lithium antisite defects in this direction further hinders the transport of lithium ions, resulting in a low diffusion rate of lithium ions. Therefore, LiFePO₄ is difficult to exhibit excellent electrochemical performance at high electric current densities.

To this end, the present disclosure is proposed hereby.

### SUMMARY

The objective of the present disclosure is to provide a lithium iron phosphate cathode material with high diffusion rate of lithium ions and electrode reaction kinetics, so that a battery prepared from such a lithium iron phosphate cathode material features excellent rate performance, low-temperature performance, and low polarization degree.

In order to achieve the above objective, the present disclosure is implemented through the following methods:
In a first aspect, the present disclosure provides a lithium iron phosphate cathode material, comprising a lithium iron phosphate matrix and a carbon coating layer located on a surface of the lithium iron phosphate matrix;
the lithium iron phosphate cathode material has a crystal structure parameter of $α = \frac{{Fe}_{Li}}{{D}_{\left(020\right)}} \times \frac{{I}_{\left(200\right)}}{{I}_{\left(020\right)}} \times 10000$, with a unit being nm⁻¹, and the α satisfies 0.15 nm⁻¹≤α≤4.5 nm⁻¹;
where, Fe_{Li} represents a percentage of iron-lithium antisite defect in the lithium iron phosphate cathode material;
D₍₀₂₀₎ represents a crystallite size of a (020) crystal plane of the lithium iron phosphate cathode material, expressed in nm;
I₍₂₀₀₎ represents a peak intensity of a (200) characteristic diffraction peak in an X-ray diffraction pattern of the lithium iron phosphate cathode material; and
I₍₀₂₀₎ represents a peak intensity of a (020) characteristic diffraction peak in an X-ray diffraction pattern of the lithium iron phosphate cathode material.

In some embodiments, the lithium iron phosphate cathode material satisfies at least one of the following features (1) to (4):
feature (1): the crystal structure parameter α of the lithium iron phosphate cathode material satisfies 0.5 nm⁻¹≤α≤1.1 nm⁻¹;
feature (2): the Fe_{Li} of the lithium iron phosphate cathode material is ≤5%;
feature (3): a value of D₍₀₂₀₎ for the lithium iron phosphate cathode material is in a range of 35 nm to 85 nm; and
feature (4): a value of $\frac{{I}_{\left(200\right)}}{{I}_{\left(020\right)}}$ for the lithium iron phosphate cathode material is in a range of 0.25 to 0.45.

In some embodiments, the lithium iron phosphate matrix has a general structural formula of Li₁₋ₓJₓFe_{1-y}M_{y}(PO_{4-z})Q_{z};
where J is at least one selected from the group consisting of Na and Mg;
M is at least one selected from the group consisting of Al, Ni, Co, Mn, Ti, La, Ce, Cr, Mo, Ca, Ga, V, Nb, Zr, In, Zn and Y;
Q is at least one selected from the group consisting of F, S, N and Cl; and
0≤x≤0.1, 0≤y≤0.1 and 0≤z≤0.1.

In a second aspect, the present disclosure provides a preparation method of a lithium iron phosphate cathode material as described in any one of the aforementioned embodiments, including the following steps:
mixing a crystal form regulator and a metal salt in a macromolecular solution to form a first solution, and adjusting a pH of the first solution to obtain a gel;
soaking the gel in a solution of the metal salt to obtain an iron source carrier;
mixing the iron source carrier, a lithium source, and a phosphorus source in water to obtain a mixture;
subjecting the mixture to a hydrothermal reaction, followed by solid-liquid separation to obtain a lithium iron phosphate precursor; and
mixing the lithium iron phosphate precursor with a carbon source, followed by calcination under an inert atmosphere to obtain the lithium iron phosphate cathode material.

In some embodiments, the metal salt includes an iron salt and an M salt, and a molar ratio of an iron element in the iron salt to an element M in the M salt is 1:0-0.11;
the iron salt is a soluble salt of divalent iron and includes at least one selected from the group consisting of ferrous sulfate, ferrous chloride, ferrous nitrate, ferrous oxalate, and ferrous acetate; and
the M salt is a water-soluble salt of the element M, and the element M includes at least one selected from the group consisting of Al, Ni, Co, Mn, Ti, La, Ce, Cr, Mo, Ca, Ga, V, Nb, Zr, In, Zn and Y.

In some embodiments, a process of preparing the iron source carrier satisfies at least one of the following features (5) to (11):
feature (5): a mass percentage of the macromolecule in the first solution is 1 wt% to 30 wt%;
feature (6): a mass ratio of the macromolecule, the crystal form regulator and the metal salt in the first solution is 1:0.05-0.3:0.05-0.5;
feature (7): the macromolecule includes at least one selected from the group consisting of chitosan, carboxymethyl chitosan, tannic acid, gelatin, and aminoethyl-β-cyclodextrin; and the crystal form regulator includes at least one selected from the group consisting of ethylene glycol, polyethylene glycol, polyvinyl alcohol, polyvinylpyrrolidone, and diethylene glycol;
feature (8): adjusting the pH of the first solution refers to adjusting the pH of the first solution to 7.0-7.5;
feature (9): divalent iron ions in the solution of the metal salt have a concentration of 0.1 mol/L to 1.0 mol/L;
feature (10): a solid-to-liquid ratio of the gel to the solution of the metal salt is 1g:100 mL-500 mL; and the soaking is conducted for 10 min to 30 min; and
feature (11): the first solution and/or the solution of the metal salt further includes an antioxidant; the antioxidant includes ascorbic acid; and a molar ratio of the antioxidant to the iron element in the first solution and/or the solution of the metal salt is 0.1-0.3:1.

In some embodiments, the preparation method satisfies at least one of the following features (12) to (15):
feature (12): the lithium source includes at least one selected from the group consisting of lithium hydroxide, lithium chloride, and lithium acetate; and the lithium source in the mixture has a concentration of 0.8 mol/L to 2.5 mol/L;
feature (13): the mixture further includes a doping source, the doping source includes a metal doping source and/or a non-metal doping source; the metal doping source is a J source, which is a water-soluble compound containing at least one element selected from the group consisting of Na and Mg; and the non-metal doping source is a Q source, which is a water-soluble compound containing at least one element selected from the group consisting of F, S, N, and Cl;
feature (14): the mixture has a pH of 2.0-6.0;
feature (15): the hydrothermal reaction is conducted at a temperature of 140 °C to 240 °C for 5 h to 20 h.

In some embodiments, the preparation method satisfies at least one of the following features (16) to (18):
feature (16): the carbon source includes at least one selected from the group consisting of sucrose, glucose, starch, polyethylene glycol, phenolic resin, cellulose, and citric acid; and a mass of the carbon source is 0.1% to 3% of that of the lithium iron phosphate precursor;
feature (17): the inert atmosphere includes at least one selected from the group consisting of nitrogen, helium, and argon; and
feature (18): the calcination is conducted at a temperature of 500 °C to 800 °C for 4 h to 14 h.

In a third aspect, the present disclosure provides a cathode sheet including the lithium iron phosphate cathode material according to any one of the aforementioned embodiments or a lithium iron phosphate cathode material obtained by the preparation method according to any one of the aforementioned embodiments.

In a fourth aspect, the present disclosure provides a lithium-ion battery including the cathode sheet according to the aforementioned embodiments.

The present disclosure has the following beneficial effects:
(1) In the present disclosure, by optimizing the crystal structure of the lithium iron phosphate cathode material, the lithium iron phosphate cathode material is enabled to have a lower reaction activation energy for deintercalation and intercalation of lithium ions, resulting in a high diffusion rate of lithium ions and thus excellent electrode reaction kinetics. Further, the corresponding lithium-ion battery features excellent rate performance, low-temperature performance, and low polarization degree.
(2) In the present disclosure, by slowly releasing Fe²⁺ and the crystal form regulator during the hydrothermal reaction process through the prepared iron source carrier, on one hand, the diffusion rate of Fe²⁺ is reduced and the iron-lithium antisite defect is decreased; on the other hand, during the growth stage of lithium iron phosphate, the crystal form regulator is slowly released to induce appropriate preferred orientation growth of crystals, such that the obtained lithium iron phosphate cathode material has both excellent electrode reaction kinetics and high tap density.

### BRIEF DESCRIPTION OF DRAWINGS

In order to more clearly explain the technical schemes of the examples in the present disclosure, the accompanying drawings involved in the examples will be introduced briefly below. It should be understood that the following accompanying drawings only illustrate some examples of the present disclosure, and thus should not be construed as a limitation on the scope. For those of ordinary skills in the art, other relevant drawings can also be obtained based on these accompanying drawings without creative efforts.
FIG. 1 is a refined X-ray diffraction pattern of the lithium iron phosphate cathode material provided in Example 6;
FIG. 2 is a transmission electron microscope image of the lithium iron phosphate cathode material provided in Example 7;
FIGS. 3(a)-3(b) are cyclic voltammetry curves of the lithium iron phosphate cathode materials (at -15 °C), where FIG. 3(a) corresponds to the lithium iron phosphate cathode material provided in Example 6, and FIG. 3(b) corresponds to the lithium iron phosphate cathode material provided in Comparative Example 2.

### DETAILED DESCRIPTION

To illustrate the objectives, technical schemes and advantages of the examples of the present disclosure more clearly, the technical schemes of the present disclosure will be described hereinafter clearly and completely in conjunction with the implementation modes. For the technical content well-known in the art to which the present disclosure pertains and the content involving actually repeated structures, detailed description thereof will be omitted to avoid unnecessary verbosity and facilitate the understanding and implementation by those of ordinary skills in the art.

In addition, the accompanying drawings and the following description are provided for those of ordinary skills in the art to fully understand the present disclosure, and are not intended to limit the content recited in the claims. For the specific conditions not specified in the examples, it shall be conducted in accordance with conventional conditions or the conditions recommended by the manufacturers. The reagents or instruments used without indicating the manufacturers are all conventional commercial products available on the market.

In the description of the examples of the present disclosure, the terms "first," "second," and the like are used merely to distinguish different objects, and shall not be construed as indicating or implying relative importance, or implicitly indicating the quantity, a specific order or a primary-secondary relationship of the indicated technical features. The term "and/or" is used for describing an association between associated objects and representing that three associations may exist. For example, "A and/or B" may indicate that only A exists, only B exists, and both A and B exist.

For the sake of brevity, the present disclosure specifically discloses certain numerical ranges, and various numerical ranges may be combined with each other to form corresponding embodiments. Neither the endpoints of the ranges disclosed in the present disclosure nor any specific numerical values are limited to the exact ranges or values. These ranges and values shall be construed as encompassing values close to such ranges or values. For numerical ranges, the endpoints of each range, the endpoints of each range and individual point values, as well as the individual point values may be combined with each other to derive one or more new numerical ranges, which shall be deemed to be specifically disclosed herein.

Unless otherwise specified, the terms used in the present disclosure shall have the well-known meanings commonly understood by those of ordinary skills in the art.

Due to its olivine crystal structure, the lithium iron phosphate cathode material allows lithium ions to diffuse only along one-dimensional channels. The iron-lithium antisite defects present in these channels severely impede lithium-ion diffusion, resulting in a low lithium-ion diffusion rate and poor electrode reaction kinetics. Therefore, in the existing technology, it is common to prepare small-sized lithium iron phosphate particles by nanosizing to shorten the lithium-ion diffusion distance. However, nanosizing is usually accompanied by an unstable reaction state, which tends to increase iron-lithium antisite defects. Alternatively, preferred orientation growth of lithium iron phosphate crystals is induced to shorten the lithium-ion diffusion channels, but this tends to result in a plate-like or flake-like morphology of lithium iron phosphate, reducing the tap density and consequently affecting the specific discharge capacity and energy density.

Through extensive experiments and research, the inventors of the present disclosure have discovered a technical scheme that enables the lithium iron phosphate cathode material to simultaneously possess excellent electrode reaction kinetics and high tap density, thereby enabling the lithium-ion battery to simultaneously exhibit excellent rate performance, low-temperature performance, and low polarization degree.

The present disclosure provides a lithium iron phosphate cathode material including a lithium iron phosphate matrix and a carbon coating layer located on a surface of the lithium iron phosphate matrix, where the lithium iron phosphate cathode material has a crystal structure parameter of $α = \frac{{Fe}_{Li}}{{D}_{\left(020\right)}} \times \frac{{I}_{\left(200\right)}}{{I}_{\left(020\right)}} \times 10000$, expressed in nm⁻¹, and the α satisfies 0.15 nm⁻¹≤α≤4.5 nm⁻¹;
where Fe_{Li} represents a percentage of iron-lithium antisite defects in the lithium iron phosphate cathode material; D₍₀₂₀₎ represents a crystallite size of a (020) crystal plane of the lithium iron phosphate cathode material, expressed in nm; I₍₂₀₀₎ represents a peak intensity of a (200) characteristic diffraction peak in an X-ray diffraction pattern of the lithium iron phosphate cathode material; and I₍₀₂₀₎ represents a peak intensity of a (020) characteristic diffraction peak in the X-ray diffraction pattern of the lithium iron phosphate cathode material.

The value of the crystal structure parameter α of the lithium iron phosphate cathode material in the present disclosure is 0.15 nm⁻¹ to 4.5 nm⁻¹, for example any one of 0.15 nm⁻¹, 0.5 nm⁻¹, 1.0 nm⁻¹, 2.0 nm⁻¹, 3.0 nm⁻¹, 4.0 nm⁻¹, and 4.5 nm⁻¹ or a range value between any two of the above values.

It should be noted that the iron-lithium antisite defect is an inherent lattice disorder phenomenon where iron ions occupy sites that should have been occupied by lithium ions. The presence of such defects reduces the available sites for Li⁺ storage, severely hindering or even blocking the diffusion of lithium ions in the lithium iron phosphate cathode material, increasing the reaction activation energy for deintercalation and intercalation of lithium ions, and causing a significant decrease in electrochemical performance.

D₍₀₂₀₎ represents the crystallite size of the lithium iron phosphate cathode material in the (020) crystal plane direction. In the lithium iron phosphate cathode material, due to the lowest activation energy required for transport of Li⁺ along a b-axis direction, lithium ions in the lithium iron phosphate cathode material tend to diffuse along the one-dimensional channel in the b-axis direction (perpendicular to the (020) crystal plane direction). In this direction, the smaller the size of the crystal, the shorter the distance of the lithium-ion diffusion channel, which is more conducive to achieving high-rate performance.

I₍₂₀₀₎ and I₍₀₂₀₎ represent the peak intensities of the characteristic diffraction peaks of the (200) crystal plane and the (020) crystal plane in the X-ray diffraction pattern of the lithium iron phosphate cathode material, respectively. The ratio of $\frac{{I}_{\left(200\right)}}{{I}_{\left(020\right)}}$ reflects an orientation growth mode of the lithium iron phosphate cathode material. A smaller ratio of $\frac{{I}_{\left(200\right)}}{{I}_{\left(020\right)}}$ indicates that the lithium iron phosphate cathode material grows along an ac-plane direction, that is, the crystal length along the b-axis direction is shorter. The crystal orientation of the lithium iron phosphate is divided into three directions: a, b, and c axes. Due to the lowest activation energy required for lithium ions to diffuse along the b-axis (perpendicular to the (020) crystal plane direction), lithium ions tend to diffuse along the b-axis direction. In such a transport mode, where the b-axis serves as the lithium-ion diffusion channel and is perpendicular to the ac-plane formed by an a-axis and a c-axis, a larger ac plane indicates more channels available for diffusion of lithium ions. The ratio of peak intensities of the characteristic diffraction peaks of the crystal planes can reflect the relative content of the crystal planes. I₍₀₂₀₎ represents a diffraction peak intensity of an ac crystal plane, and I₍₂₀₀₎ represents a diffraction peak intensity of a bc crystal plane. When the ratio of $\frac{{I}_{\left(200\right)}}{{I}_{\left(020\right)}}$ is small, it indicates a relatively high content of the ac crystal plane, suggesting that the crystal orientation of the lithium iron phosphate grows in a preferred orientation along the ac plane, that is, the lithium-ion diffusion channels along the b-axis direction are relatively short and numerous, which can effectively shorten the transport distance of lithium ions and improve the transport efficiency.

In summary, all of the iron-lithium antisite defect, D₍₀₂₀₎, I₍₂₀₀₎, and I₍₀₂₀₎ will affect the diffusion of lithium ions. Through the study of the above parameters, the present disclosure proposes a crystal structure parameter α, where $α = \frac{{Fe}_{Li}}{{D}_{\left(020\right)}} \times \frac{{I}_{\left(200\right)}}{{I}_{\left(020\right)}} \times 10000$, which comprehensively reflects the quality of the lithium-ion diffusion channel of the lithium iron phosphate cathode material. A higher quality indicates faster lithium-ion diffusion and superior electrode reaction kinetics. When the crystal structure parameter α falls within a value range of 0.15 nm⁻¹ to 4.5 nm⁻¹, the lithium iron phosphate cathode material has high-quality lithium-ion diffusion channels, which not only have fewer obstructions, but also have an appropriate quantity and length, making the lithium iron phosphate cathode material have high tap density and exhibit excellent electrode reaction kinetics performance. Further, the corresponding lithium-ion battery also features excellent rate performance, low-temperature performance, and low polarization degree.

In some embodiments, the crystal structure parameter α satisfies 0.5 nm⁻¹≤α≤1.1 nm⁻¹. The lithium iron phosphate cathode material with a crystal structure parameter α satisfying the above range has better electrochemical performance.

In some embodiments, Fe_{Li}≤5%.

In some embodiments, the value of D₍₀₂₀₎ ranges from 35 nm to 85 nm, for example, any one of 35 nm, 45 nm, 55 nm, 65 nm, 75 nm, and 85 nm, or a range value between any two of the above values.

If D₍₀₂₀₎ is too small, it will reduce the tap density of the lithium iron phosphate cathode material, affecting the specific discharge capacity. Additionally, it will decrease the mechanical strength of the lithium iron phosphate cathode material, causing the crystal structure prone to collapse during repeated charge-discharge cycling, thereby degrading cycle performance.

In some embodiments, the value of $\frac{{I}_{\left(200\right)}}{{I}_{\left(020\right)}}$ is in the range of 0.25 to 0.45, for example, any one of 0.25, 0.30, 0.35, 0.40 and 0.45, or a range value between any two of the above values.

When $\frac{{I}_{\left(200\right)}}{{I}_{\left(020\right)}}$ is too small, it indicates that the length of the lithium iron phosphate cathode material along the b-axis direction is too short, causing the material to exhibit a plate-like or flake-like morphology, affecting the tap density and compaction density, and thus affecting the specific capacity and energy density. When $\frac{{I}_{\left(200\right)}}{{I}_{\left(020\right)}}$ is too large, it indicates that the length of the lithium iron phosphate cathode material along the b-axis direction is too long, that is, the lithium-ion diffusion channel is too long, affecting the diffusion speed of lithium ions and thus affecting the rate performance.

In some embodiments, the lithium iron phosphate matrix has a general structural formula of Li₁₋ₓJₓFe_{1-y}M_{y} (PO_{4-z})Q_{z}; where J is at least one selected from the group consisting of Na and Mg, and J may be any one or more of the above elements; M is at least one selected from the group consisting of Al, Ni, Co, Mn, Ti, La, Ce, Cr, Mo, Ca, Ga, V, Nb, Zr, In, Zn and Y, and M may be any one or more of the above elements; Q is at least one selected from the group consisting of F, S, N and Cl, and Q may be any one or more of the above elements. The values of x, y, and z in the general formula are as follows: 0≤x≤0.1, 0≤y≤0.1 and 0≤z≤0.1. In some embodiments, x, y, z may be same or different, and may be independently 0.00, 0.03, 0.05, 0.08, or 0.10, etc.

The present disclosure provides a preparation method of the aforementioned lithium iron phosphate cathode material, however, the preparation method is not limited thereto. The preparation method includes the following steps:
S1, mixing a crystal form regulator and a metal salt in a macromolecular solution to form a first solution, and adjusting a pH of the first solution to obtain a gel; and then soaking the gel in a solution of the metal salt to obtain an iron source carrier;
S2, mixing the iron source carrier, a lithium source, and a phosphorus source in water to obtain a mixture; subjecting the mixture to a hydrothermal reaction, followed by solid-liquid separation to obtain a lithium iron phosphate precursor; and
S3, mixing the lithium iron phosphate precursor with a carbon source, followed by calcination under an inert atmosphere to obtain the lithium iron phosphate cathode material.

The present disclosure prepares an iron source carrier containing a crystal form regulator and Fe²⁺ through a gel method. Functional groups of the macromolecule and the crystal form regulator coordinate with the metal ions (mainly Fe²⁺) in the metal salt to form a complex, and the macromolecule and/or the crystal form regulator interact through hydrogen bonds, such that the macromolecule, the crystal form regulator and the metal ions form a gel crosslinked via physical crosslinking. The gel is soaked in a solution of the metal salt for reinforcement to further load metal ions, thereby obtaining the metal source carrier. Due to the fact that the metal source in the metal source carrier is mainly an Fe²⁺ source, in order to make better expression, the term "iron source carrier" is used throughout the present disclosure instead of the "metal source carrier". A portion of Fe²⁺ of the iron source carrier coordinates with the functional groups of the macromolecule and the crystal form regulator to form the skeleton structure of gel, so as to ensure the structural stability of the gel. Another portion of Fe²⁺ is loaded into the gel during the soaking and reinforcement process, having greater freedom of movement than Fe²⁺ in the skeleton, enabling the carrier to have a differentiated release rate of Fe²⁺, forming a slow-release effect.

The iron source carrier, the lithium source, and the phosphorus source are mixed in water, and subjected to hydrothermal reaction to obtain a lithium iron phosphate precursor. During the initial stage of reaction, Fe²⁺ loaded in the iron source carrier is preferentially released and reacts with the lithium and phosphorus sources to nucleate and grow under high temperature and high pressure. Due to the slow release of Fe²⁺ from the iron source carrier, the diffusion rate of Fe²⁺ is slower than that of Li⁺. Consequently, Li⁺ will be preferentially introduced into the crystal structure than Fe²⁺ and occupy the lithium sites, avoiding the occurrence of iron-lithium antisite. During the later stage of reaction, as the hydrothermal reaction proceeds, Fe²⁺ in the skeleton of the iron source carrier begins to be released, and the iron source carrier gradually disintegrates, making the macromolecule and the crystal form regulator disperse into the solvent. The crystal form regulator adsorbs onto the oxygen atoms on the (020) crystal plane of LiFePO₄ in the b-axis direction via hydrogen bonding, inhibiting the growth of the crystal plane along the b-axis direction and promoting the growth of the crystal along the non-inhibitory crystal plane direction, thereby inducing the growth of the lithium iron phosphate into a crystal with an exposed (020) crystal plane and shortening the diffusion channel of lithium ions. Due to the gradual release of the crystal form regulator during the later stage of the hydrothermal reaction, by which time the lithium iron phosphate crystal has already developed a spherical morphology of a certain size. Therefore, the crystal form regulation at this stage can avoid the formation of rod-like or plate-like/flake-like crystal morphologies with excessively short b-axis, allowing the lithium iron phosphate crystal to maintain a quasi-spherical morphology, so as to ensure good tap density and compaction density.

In some embodiments, the metal salt includes an iron salt and an M salt. A molar ratio of an iron element in the iron salt to an element M in the M salt is 1:0-0.11. The iron salt is a soluble salt of the divalent iron and includes at least one selected from the group consisting of ferrous sulfate, ferrous chloride, ferrous nitrate, ferrous oxalate, and ferrous acetate. The M salt is a water-soluble salt of the element M; and the element M includes at least one selected from the group consisting of Al, Ni, Co, Mn, Ti, La, Ce, Cr, Mo, Ca, Ga, V, Nb, Zr, In, Zn and Y. When the molar ratio of iron to element M is 1:0, it indicates that the metal salt contains only an iron salt.

In some embodiments, the process of preparing an iron source carrier is carried out under an inert atmosphere, which can effectively prevent the divalent iron from being oxidized to trivalent iron.

In some embodiments, a mass percentage of the macromolecule in the first solution is 1 wt% to 30 wt%, for example, any one of 1 wt%, 5 wt%, 10 wt%, 20 wt%, and 30 wt%, or a range value between any two of the above values.

In some embodiments, a mass ratio of the macromolecule, the crystal form regulator, and the metal salt in the first solution is 1:0.05-0.3:0.05-0.5, for example, any one of 1:0.05:0.05, 1:0.05:0.5, 1:0.3:0.05, 1:0.3:0.5, and 1:0.2:0.3, or a range value between any two of the above values. The mass ratio of the macromolecule, the crystal form regulator and the metal salt can affect the crosslinking density of a gel, thereby affecting the mechanical strength and decomposition rate of the gel.

In some embodiments, the macromolecule includes at least one selected from the group consisting of chitosan, carboxymethyl chitosan, tannic acid, gelatin, and aminoethyl-β-cyclodextrin. The crystal form regulator includes at least one selected from the group consisting of ethylene glycol, polyethylene glycol, polyvinyl alcohol, polyvinylpyrrolidone, and diethylene glycol.

In some embodiments, the pH of the first solution is adjusted to 7.0-7.5 to obtain a gel; for example, the pH of the first solution may be any one of 7.0, 7.1, 7.2, 7.3, 7.4, and 7.5, or a range value between any two of the above values. The aforementioned macromolecule contains a large number of hydrogen-containing active groups, and adjusting the pH of the first solution to 7.0-7.5 is conducive to deprotonation of the hydrogen-containing active groups, facilitating coordination with metal ions, and promoting physical crosslinking to form a gel.

In some embodiments, the solution of the metal salt is a mixed aqueous solution of the metal salt. The divalent iron ions in the solution of the metal salt has a concentration of 0.1 mol/L to 1.0 mol/L, for example, any one of 0.1 mol/L, 0.3 mol/L, 0.5 mol/L, 0.7 mol/L, and 1.0 mol/L, or a range value between any two of the above values.

In some embodiments, the solid-to-liquid ratio of the gel to the solution of the metal salt is 1g:100 mL-500 mL, for example, any one of 1g: 100mL, 1g: 300mL and 1g: 500mL, or a range value between any two of the above values. The soaking is conducted for 10 min to 30 min, for example, any one of 10 min, 20 min, and 30 min, or a range value between any two of the above values.

In some embodiments, the first solution and/or the solution of the metal salt further includes an antioxidant. The antioxidant includes ascorbic acid. A molar ratio of the antioxidant to the iron element in the first solution and/or the solution of the metal salt is 0.1-0.3:1, for example, any one of 0.1:1, 0.2:1, and 0.3:1, or a range value between any two of the above values. The addition of an antioxidant can prevent divalent iron from being oxidized to trivalent iron.

In some embodiments, the lithium source includes at least one selected from the group consisting of lithium hydroxide, lithium chloride, and lithium acetate. The lithium source in the mixture has a concentration of 0.8 mol/L to 2.5 mol/L, for example, any one of 0.8 mol/L, 1.0 mol/L, 1.5 mol/L, 2.0 mol/L, and 2.5 mol/L, or a range value between any two of the above values.

In some embodiments, the mixture further includes a doping source. The doping source includes a metal doping source and/or a non-metal doping source. The metal doping source is a J source, which is a water-soluble compound containing at least one element selected from the group consisting of elements Na and Mg. The non-metal doping source is a Q source, which is a water-soluble compound containing at least one element selected from the group consisting of elements F, S, N, and Cl.

In some embodiments, the pH of the mixture is 2.0 to 6.0, for example, any one of 2.0, 3.0, 4.0, 5.0, and 6.0, or a range value between any two of the above values. The pH of the mixture will affect the slow-release rate of the iron source carrier: the lower the pH of the mixture, the faster the release rate of Fe²⁺ from the iron source carrier, the higher the degree of saturation of the hydrothermal reaction system, and the faster the nucleation and growth of the lithium iron phosphate crystals. In some embodiments, the pH value of the hydrothermal reaction system can be regulated by adding a commonly used acidic regulator such as hydrochloric acid, etc., to ensure that it is within a set range.

In some embodiments, the reaction temperature of the hydrothermal reaction is 140 °C to 240 °C, for example, any one of 140 °C, 160 °C, 180 °C, 200 °C, and 240 °C, or a range value between any two of the above values. The reaction time is 5 h to 20 h, for example, any one of 5 h, 10 h, 15 h, and 20 h, or a range value between any two of the above values.

In some embodiments, the carbon source includes at least one selected from the group consisting of sucrose, glucose, starch, polyethylene glycol, phenolic resin, cellulose, and citric acid. The mass of the carbon source is 0.1% to 3% of that of the lithium iron phosphate precursor, for example, it can be any one of 0.1%, 0.5%, 1.0%, 1.5%, 2%, and 3%, or a range value between any two of the above values. The addition of a carbon source during the calcination process can form a carbon coating layer, thereby improving the conductivity of the lithium iron phosphate cathode material.

In some embodiments, the inert atmosphere includes at least one selected from the group consisting of nitrogen, helium, and argon.

In some embodiments, the calcination temperature is 500 °C to 800 °C, for example, any one of 500 °C, 600 °C, 700 °C, and 800 °C, or any range value between any two of the above values. The calcination time is 4 h to 14 h, for example, any one of 4 h, 8 h, 10 h, 12 h, and 14 h, or any range value between any two of the above values.

The present disclosure further provides a cathode sheet including the aforementioned lithium iron phosphate cathode material. In some embodiments, the cathode sheet may also include a cathode current collector, wherein a cathode active coating is formed on at least one surface of the cathode current collector, and the lithium iron phosphate cathode material exists in the cathode active coating as a cathode active material.

The present disclosure further provides a lithium-ion battery, including the aforementioned cathode sheet. In some embodiments, the lithium-ion battery may also include a anode electrode sheet, an electrolyte, and a separator, etc., to form a complete battery structure with good electrochemical performance. The specific types of the anode electrode sheet, the electrolyte, and the separator are not limited.

In some embodiments, the lithium battery may be in the form of a secondary battery. During the charging and discharging processes of the secondary battery, active ions are repeatedly intercalated into and deintercalated from the cathode sheet and the anode electrode sheet, and the electrolyte functions to conduct ions between the cathode sheet and the anode electrode sheet. In some embodiments, the lithium battery may not be in the form of a secondary battery, but may adopt forms such as a battery module or a battery pack.

The present disclosure provides a device comprising the aforementioned secondary battery, battery module, or battery pack. The secondary battery, battery module, or battery pack may serve as a power source for the device or as an energy storage unit of the device. Examples of the device include, but are not limited to, mobile devices (e.g., mobile phones, laptop computers, etc.), electric vehicles (e.g., battery electric vehicles, hybrid electric vehicles, plug-in hybrid electric vehicles, electric bicycles, electric scooters, electric golf carts, electric trucks, etc.), electric trains, ships, satellites, and energy storage systems.

The features and performances of the present disclosure are further described in detail below in conjunction with the Examples.

### Example 1

This Example provided a lithium iron phosphate cathode material, and a preparation method of which included the follows steps:
S1, mixing, under a nitrogen atmosphere, polyethylene glycol and ferrous sulfate in an aqueous acetic acid solution of chitosan and heating at 45 °C to form a first solution, adjusting the pH of the first solution to 7.5, and allowing it to stand to obtain a gel; soaking the gel in 0.3 mol/L of ferrous sulfate solution at a solid-to-liquid ratio of 1g: 200 mL for 10 min to obtain an iron source carrier.

The concentration of acetic acid in the aqueous acetic acid solution was 1.5 wt%, and the concentration of chitosan in the first solution was 2 wt%; the mass ratio of chitosan, polyethylene glycol, and ferrous sulfate in the first solution was 1:0.2:0.3; both the first solution and the ferrous sulfate solution included ascorbic acid, and the molar ratio of the ascorbic acid to iron in both the first solution and the ferrous sulfate solution was 0.2:1.

S2, mixing the iron source carrier, lithium hydroxide, and phosphoric acid in water, adjusting the pH to 3.5 to obtain a mixture; reacting the mixture in an autoclave at 170 °C for 15 h, followed by filtering, washing, and drying to obtain a lithium iron phosphate precursor.

A molar ratio of P: Li: Fe in the mixture was 1:1.3:1, and the concentration of lithium hydroxide in the mixture was 1.0 mol/L.

S3, mixing the lithium iron phosphate precursor and glucose by sand milling, followed by spray drying and calcination at 680 °C for 9 h under a nitrogen atmosphere to obtain the lithium iron phosphate cathode material.

The mass of glucose was 2.2% of the mass of the lithium iron phosphate precursor.

### Example 2

This Example provided a lithium iron phosphate cathode material, a preparation method of which included the follows steps:
S1, mixing, under a nitrogen atmosphere, polyvinyl alcohol and a metal salt in an aqueous solution of gelatin to form a first solution, adjusting the pH of the first solution to 7.2, and allowing it to stand to obtain a gel; soaking the gel in a solution of the metal salt at a solid-to-liquid ratio of 1g: 500 mL for 30 min to obtain an iron source carrier.

The metal salt was a mixture of ferrous chloride and cobalt acetate, with a molar ratio of iron to cobalt of 1:0.08 in the mixture; the concentration of gelatin in the first solution was 20 wt%, and the mass ratio of gelatin, polyvinyl alcohol, and metal salt in the first solution was 1:0.1:0.5; the concentration of divalent iron ions in the solution of the metal salt was 0.1 mol/L; both the first solution and the solution of the metal salt included ascorbic acid, and a molar ratio of ascorbic acid to iron in both the first solution and the solution of the metal salt was 0.1:1.

S2, mixing the iron source carrier, lithium acetate, and phosphoric acid in water, adjusting the pH to 2.2 to obtain a mixture; reacting the mixture in an autoclave at 200 °C for 12 h, followed by filtering, washing, and drying to obtain a lithium iron phosphate precursor.

A molar ratio of P: Li: Fe+Co in the mixture was 1:1.3:1, and the concentration of lithium acetate in the mixture was 2.3 mol/L.

S3, mixing the lithium iron phosphate precursor and citric acid by sand milling, followed by spray drying and calcination at 770 °C for 5 h under a nitrogen atmosphere to obtain the lithium iron phosphate cathode material.

The mass of citric acid was 1.5% of the mass of the lithium iron phosphate precursor.

### Example 3

This Example provided a lithium iron phosphate cathode material, a preparation method of which included the follows steps:
S1, mixing, under a nitrogen atmosphere, polyethylene glycol and ferrous chloride in an aqueous solution of tannic acid to form a first solution, adjusting the pH of the first solution to 7.0, and allowing it to stand to obtain a gel; soaking the gel in 1 mol/L of ferrous chloride solution at a solid-to-liquid ratio of 1g: 350 mL for 15 min to obtain an iron source carrier.

The concentration of tannic acid in the first solution was 28 wt%, the mass ratio of tannic acid, polyethylene glycol, and ferrous chloride in the first solution was 1:0.26:0.1; both the first solution and the ferrous chloride solution included ascorbic acid, and the molar ratio of ascorbic acid to iron in both the first solution and the ferrous chloride solution was 0.3:1.

S2, mixing the iron source carrier, lithium chloride, and phosphoric acid in water, adjusting the pH to 5.8 to obtain a mixture; reacting the mixture in an autoclave at 230 °C for 7 h, followed by filtering, washing, and drying to obtain a lithium iron phosphate precursor.

The molar ratio of P: Li: Fe in the mixture was 1:1.3:1, and the concentration of lithium chloride in the mixture was 0.8 mol/L.

S3, mixing the lithium iron phosphate precursor and sucrose by sand milling, followed by spray drying and calcination at 530 °C for 13 h under a nitrogen atmosphere to obtain the lithium iron phosphate cathode material.

The mass of sucrose was 0.3% of the mass of the lithium iron phosphate precursor.

### Example 4

This Example provided a lithium iron phosphate cathode material, and a preparation method of which was exactly the same as Example 1 except that in step S1, the concentration of chitosan in the first solution was 1.5 wt%.

### Example 5

This Example provided a lithium iron phosphate cathode material, and a preparation method of which was exactly the same as Example 1 except that in step S1, the concentration of chitosan in the first solution was 2.8 wt%.

### Example 6

This Example provided a lithium iron phosphate cathode material, and a preparation method of which was exactly the same as Example 1 except that in step S1, the mass ratio of chitosan, polyethylene glycol, and ferrous sulfate in the first solution was 1:0.09:0.3.

### Example 7

This Example provided a lithium iron phosphate cathode material, and a preparation method of which was exactly the same as Example 1 except that in step S1, the mass ratio of chitosan, polyethylene glycol, and ferrous sulfate in the first solution was 1:0.25:0.3.

### Example 8

This Example provided a lithium iron phosphate cathode material, and a preparation method of which was exactly the same as Example 1 except that in step S1, the mass ratio of chitosan, polyethylene glycol, and ferrous sulfate in the first solution was 1:0.2:0.15.

### Example 9

This Example provided a lithium iron phosphate cathode material, and a preparation method of which was exactly the same as Example 1 except that in step S1, the mass ratio of chitosan, polyethylene glycol, and ferrous sulfate in the first solution was 1:0.2:0.45.

### Example 10

This Example provided a lithium iron phosphate cathode material, and a preparation method of which was exactly the same as Example 1 except that in step S1, the concentration of ferrous sulfate solution was 0.5 mol/L.

### Example 11

This Example provided a lithium iron phosphate cathode material, and a preparation method of which was exactly the same as Example 1 except that in step S1, the concentration of ferrous sulfate solution was 0.8 mol/L.

### Example 12

This Example provided a lithium iron phosphate cathode material, and a preparation method of which was exactly the same as Example 1 except that the method included in step S2, mixing the iron source carrier, lithium hydroxide, and phosphoric acid in water, and adjusting the pH to 2.8 to obtain a mixture.

### Example 13

This Example provided a lithium iron phosphate cathode material, and a preparation method of which was exactly the same as Example 1 except that the method included in step S2, mixing the iron source carrier, lithium hydroxide, and phosphoric acid in water, and adjusting the pH to 4.5 to obtain a mixture.

### Example 14

This Example provided a lithium iron phosphate cathode material, a preparation method of which included the follows steps:
S1, mixing, under a nitrogen atmosphere, polyethylene glycol and ferrous sulfate in an aqueous acetic acid solution of chitosan and heating at 45 °C to form a first solution, adjusting the pH of the first solution to 7.5, and allowing it to stand to obtain an iron source carrier.

The concentration of acetic acid in the aqueous acetic acid solution was 1.5 wt%, and the concentration of chitosan in the first solution was 2 wt%; the mass ratio of chitosan, polyethylene glycol and ferrous sulfate in the first solution was 1:0.2:0.3; the first solution included ascorbic acid, and the molar ratio of ascorbic acid to iron in the first solution was 0.2:1.

S2, mixing the iron source carrier, lithium hydroxide, lithium fluoride, and phosphoric acid in water, adjusting the pH to 4.5 to obtain a mixture; reacting the mixture in an autoclave at 180 °C for 16 h, followed by filtering, washing, and drying to obtain a lithium iron phosphate precursor.

The molar ratio of P:Li:Fe:F in the mixture was 1:1.3:1:0.01, and the concentration of lithium hydroxide in the mixture was 1.0 mol/L.

S3, mixing the lithium iron phosphate precursor and glucose by sand milling, followed by spray drying and calcination at 650 °C for 7 h under a nitrogen atmosphere to obtain the lithium iron phosphate cathode material.

The mass of glucose was 2.2% of the mass of the lithium iron phosphate precursor.

### Comparative Example 1

This Comparative Example provided a lithium iron phosphate cathode material, a preparation method of which included the follows steps:
S1, dissolving ferrous sulfate, lithium hydroxide, and phosphoric acid in water to obtain a mixed solution, reacting the mixed solution in an autoclave at 170 °C for 15 h, followed by filtering, washing, and drying to obtain a lithium iron phosphate precursor.

A molar ratio of P: Li: Fe in the mixed solution was 1:1.3:1; the concentration of lithium hydroxide in the mixed solution was 1.0 mol/L; the mixed solution further included ascorbic acid, and a molar ratio of ascorbic acid to iron in the mixed solution was 0.2:1.

S2, mixing the lithium iron phosphate precursor and glucose by sand milling, followed by spray drying and calcination at 680 °C for 9 h under a nitrogen atmosphere to obtain the lithium iron phosphate cathode material.

The mass of glucose was 2.2% of the mass of the lithium iron phosphate precursor.

### Comparative Example 2

This Comparative Example provided a lithium iron phosphate cathode material, a preparation method of which included the follows steps:
S1, dissolving ferrous sulfate, lithium hydroxide, polyethylene glycol and phosphoric acid in water to obtain a mixed solution, reacting the mixed solution in an autoclave at 170 °C for 15 h, followed by filtering, washing, and drying to obtain a lithium iron phosphate precursor.

The molar ratio of P: Li: Fe in the mixed solution was 1:1.3:1; the concentration of lithium hydroxide in the mixed solution was 1.0 mol/L; and the molar ratio of polyethylene glycol to ferrous sulfate was 0.2:0.5. The mixed solution further included ascorbic acid, and the molar ratio of ascorbic acid to iron in the mixed solution was 0.2:1.

S2, mixing the lithium iron phosphate precursor and glucose by sand milling, followed by spray drying and calcination at 680 °C for 9 h under a nitrogen atmosphere to obtain the lithium iron phosphate cathode material.

The mass of glucose was 2.2% of the mass of the lithium iron phosphate precursor.

### Comparative Example 3

This Comparative Example provided a lithium iron phosphate cathode material, a preparation method of which included the follows steps:
S1, mixing, under a nitrogen atmosphere, ferrous sulfate in an aqueous acetic acid solution of chitosan and heating at 45 °C to form a first solution, adjusting the pH of the first solution to 7.5, and allowing it to stand to obtain a gel; soaking the gel in 0.3 mol/L of ferrous sulfate solution at a solid-to-liquid ratio of 1g: 200 mL for 10 min to obtain an iron source carrier.

The concentration of acetic acid in the aqueous acetic acid solution was 1.5 wt%, and the concentration of chitosan in the first solution was 2 wt%; the mass ratio of chitosan to ferrous sulfate in the first solution was 1:0.3; both the first solution and the ferrous sulfate solution included ascorbic acid, and the molar ratio of ascorbic acid to iron in both the first solution and the ferrous sulfate solution was 0.2:1.

S2, mixing the iron source carrier, lithium hydroxide, phosphoric acid and polyethylene glycol in water, adjusting the pH to 4.5 to obtain a mixture; reacting the mixture in an autoclave at 170 °C for 15 h, followed by filtering, washing, and drying to obtain a lithium iron phosphate precursor.

The molar ratio of P: Li: Fe in the mixture was 1:1.3:1; the concentration of lithium hydroxide in the mixture was 1.0 mol/L; and the molar ratio of polyethylene glycol to ferrous sulfate was 0.2:0.5.

S3, mixing the lithium iron phosphate precursor and glucose by sand milling, followed by spray drying and calcination at 680 °C for 9 h under a nitrogen atmosphere to obtain the lithium iron phosphate cathode material.

The mass of glucose was 2.2% of the mass of the lithium iron phosphate precursor.

### Comparative Example 4

This Comparative Example provided a lithium iron phosphate cathode material, a preparation method of which included the follows steps:
S1, mixing, under a nitrogen atmosphere, and dissolving chitosan and polyethylene glycol in water to obtain a first solution, and adjusting the pH of the first solution to 7.5 to obtain a gel.

The concentration of chitosan in the first solution was 2 wt%, and the mass ratio of chitosan to polyethylene glycol was 1:0.2.

S2, mixing the gel, ferrous sulfate, lithium hydroxide, and phosphoric acid in water, adjusting the pH to 4.5 to obtain a mixture; reacting the mixture in an autoclave at 160 °C for 15 h, followed by filtering, washing, and drying to obtain a lithium iron phosphate precursor.

The molar ratio of P: Li: Fe in the mixture was 1:1.3:1, the concentration of lithium hydroxide in the mixture was 1.0 mol/L, and the molar ratio of polyethylene glycol to ferrous sulfate in the mixture was 0.2:0.5.

S3, mixing the lithium iron phosphate precursor and glucose by sand milling, followed by spray drying and calcination at 680 °C for 9 h under a nitrogen atmosphere to obtain the lithium iron phosphate cathode material.

The mass of glucose was 2.2% of the mass of the lithium iron phosphate precursor.

The crystal structure parameter and related parameters of the lithium iron phosphate cathode materials provided in Examples 1-14 and Comparative Examples 1-4 were tested in the present disclosure (as shown in Table 1), and their physical properties and the electrochemical performance of corresponding lithium-ion batteries were also measured (as shown in Tables 1 and 2). The specific steps were as follows:
(1) X-Ray Diffraction (XRD) Testing

The crystal phase and crystal structure of the lithium iron phosphate cathode material were tested using an X-ray powder diffractometer (Rigku Ultima IV) to obtain an XRD pattern. The diffraction source used for testing was Cu-Ka, with a wavelength of λ=0.15406 nm, a step size of 0.02°, and a scanning speed of 2°/min. Crystal structure refinement of the obtained XRD pattern was performed using a GSAS-II software to obtain an X-ray diffraction pattern, with a R_{wp} (weighted profile R-factor) of the refinement result being ≤ 5%.

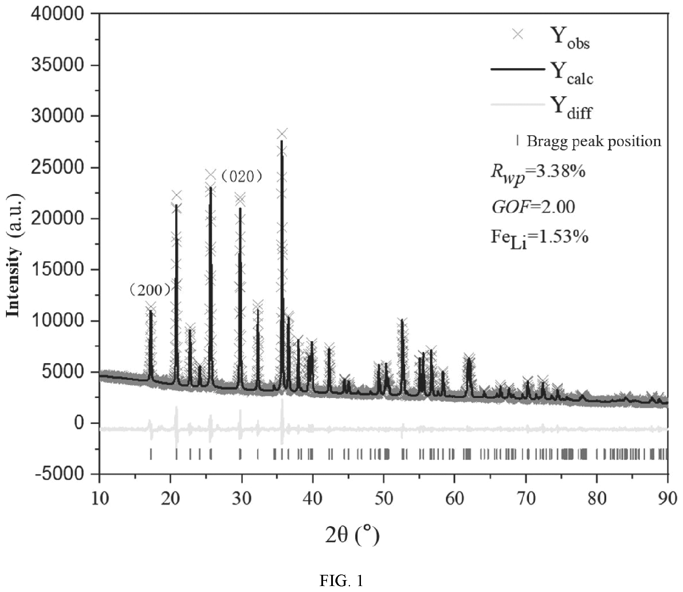

Through analysis and calculation with the GSAS-II software, information such as a percentage of iron-lithium antisite defect (Fe_{Li}), and diffraction angles (θ), full widths at half maximum (β), and peak intensities of (200) and (020) characteristic diffraction peaks, etc., were obtained. The actual peak intensities of the (200) and (020) characteristic diffraction peaks were obtained by subtracting a peak intensity of a background diffraction peak from the peak intensities of the characteristic diffraction peaks, designated as I₍₂₀₀₎ and I₍₀₂₀₎, respectively. The crystallite size in the crystal plane direction of the (020) characteristic diffraction peak was calculated using the Scherrer Formula. The Scherrer Formula is: $D = \frac{kλ}{β \times cosθ}$; where k is a constant value with a value of 0.9; λ refers to the wavelength of an incident ray, λ=0.15406 nm; β is the full width at half maximum of the characteristic diffraction peak, expressed in radians (rad); θ refers to the diffraction angle, expressed in degrees (°). The test results of Example 6 are shown in FIG. 1.

### (2) Transmission Electron Microscope (TEM) Testing

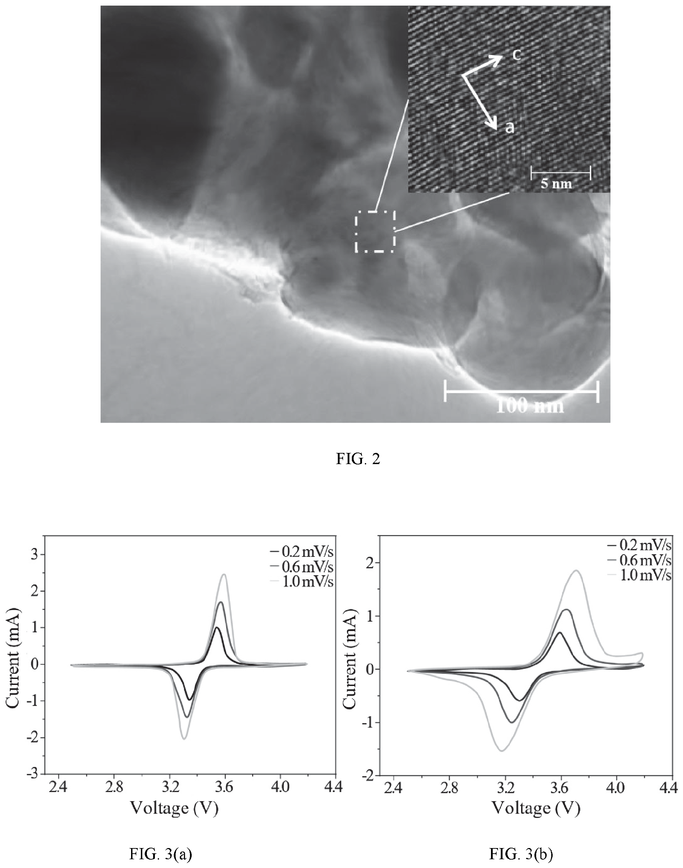

The morphology of the lithium iron phosphate cathode material was analyzed using a JEM-2000EX Transmission Electron Microscope (TEM). The test results of Example 7 are shown in FIG. 2. It can be seen from FIG. 2 that the lithium iron phosphate cathode material prepared in Example 7 exhibits a quasi-spherical morphology with a carbon layer coated on the surface, and a lattice fringe spacing observed at higher resolution indicates that the lithium iron phosphate crystal grows along the ac plane direction.

### (3) Tap Density Testing

The tap density of the lithium iron phosphate cathode material was tested according to the testing standard GB/T 21354-2008.

### (4) Electrochemical Performance Testing

The lithium iron phosphate cathode materials obtained above were assembled into coin cells for electrochemical performance testing, and the specific steps were as follows: the lithium iron phosphate cathode material, acetylene black, and polyvinylidene fluoride were uniformly mixed in N-methylpyrrolidone in a mass ratio of 90:5:5, then coated onto an aluminum foil and dried in a vacuum drying oven, which was then pressed into a cathode sheet with a diameter of 12 mm using a tablet press in an argon glove box after drying. In the glove box, the cathode sheet, a polypropylene porous separator, an anode lithium chip, and an electrolytic solution were assembled into a coin cell. The electrolytic solution was 1 M LiPF₆ in ethylene carbonate (EC): dimethyl carbonate (DMC) (with a volume ratio of 1:1), and the electrochemical performance was tested.

### (4-1) Cyclic Voltammetry Testing

The coin cell was subjected to cyclic voltammetry testing using a CHI660E electrochemical workstation to investigate the reaction kinetics of the lithium iron phosphate electrode material, where a testing voltage window was 2.4 V to 4.2 V, and a testing temperature was -15 °C.

Within the tested voltage range, lithium ions in the electrode material began to deintercalate and intercalate due to redox reactions, manifesting as a pair of redox peaks, thereby obtaining a cyclic voltammetry (CV) curve. A peak position and a peak potential value of the redox peaks in the cyclic voltammetry (CV) curve can reflect the phase transformation and ion diffusion processes in the lithium iron phosphate electrode materials. The potential difference value between an oxidation peak and a reduction peak can reflect the polarization degree of the electrode and the diffusion degree of lithium ions. The smaller the potential difference value between the oxidation peak and the reduction peak, the lower the polarization degree and the higher lithium-ion diffusion ability of the electrode, indicating better electrode reaction kinetics. Further, a growth rate of the potential difference value between the oxidation peak and the reduction peak was calculated at different scanning rates, which can reflect whether the diffusion and transfer of lithium ions were rapid and whether the deintercalation/intercalation was sufficient during the high-rate charging and discharging processes. The smaller the growth rate of the potential difference value, the more stable the diffusion ability of lithium ions remains during the charging and discharging processes at different rates, without substantial attenuation. Further, the polarization degree will not significantly increase. These factors will directly affect the low-temperature performance and rate performance of the lithium-ion batteries.

The cyclic voltammetry curves of Example 6 and Comparative Example 2 are shown in FIG.s 3(a)-3(b). As the scanning rate continues to increase, the cyclic voltammetry curve of Comparative Example 2 gradually deforms, and the potential difference value between the oxidation peak and the reduction peak increases significantly, while the cyclic voltammetry curve of Example 6 remains stable.

Testing method for the growth rate T of potential difference value between redox peaks was as follows: the potential difference value between redox peaks of the lithium iron phosphate electrode material were sequentially tested at different scanning rates L (0.2 mV/s, 0.6 mV/s, and 1.0 mV/s), and the growth rate T of potential difference value between redox peaks was calculated using the following formula.${T}_{1} = \frac{{L}_{0.6} - {L}_{0.2}}{{L}_{0.2}} , {T}_{2} = \frac{{L}_{1.0} - {L}_{0.6}}{{L}_{0.6}}$, where L_{0.2} represents the potential difference value between redox peaks of the lithium iron phosphate electrode material at a scanning rate of 0.2 mV/s, L_{0.6} represents the potential difference value between redox peaks of the lithium iron phosphate electrode material at a scanning rate of 0.6 mV/s, and L_{1.0} represents the potential difference value between redox peaks of the lithium iron phosphate electrode material at a scanning rate of 1.0 mV/s.

### (4-2) Constant Current Charging-Discharging Testing

The coin cells were subjected to constant current charging-discharging testing using a LAND battery testing system to investigate the electrochemical performances such as rate performance and capacity retention rate, etc., of the lithium iron phosphate cathode material. The testing voltage was 2.0V to 3.9V. For 1 g of the lithium iron phosphate cathode material, the charging-discharging rate at 1 C was 170 mA.

The specific discharge capacity at different rates was tested at room temperature of 25 °C, and the low-temperature capacity retention rate was tested at 1 C. The calculation formula is $\frac{Specific discharge capacity at - 15 ° C}{Specific discharge capacity at 25 ° C} \times 100 % .$

Example 6 was taken as an example to illustrate the calculation process of the crystal structure parameter and related parameters. As shown in FIG. 1, Y_{obs} represents an observed XRD data, Y_{calc} represents a calculated data after refinement of the observed data, Y_{diff} is a difference curve between the observed data and the calculated data, GOF is a goodness-of-fit factor, and R_{wp} is a weighted profile R-factor from the refinement. Based on the analysis and calculation of the refined calculated data, Fe_{Li} of 1.53%, I₍₂₀₀₎ of 7323.83, and I₍₀₂₀₎ of 18579.56 were obtained in the present disclosure. The diffraction angle θ of the (020) characteristic diffraction peak was 14.8642°, the full width at half maximum was 0.00227 rad, and D₍₀₂₀₎ was calculated to be 62.9 nm according to the Scherrer Formula.

**Table 1 Test Results of Crystal structure parameter α and Related Parameters thereof, and Tap Density of Different Examples and Comparative Examples**

| Experiment Nos. | Fe_{Li} (%) | D₍₀₂₀₎ (nm) | $\frac{{I}_{\left(200\right)}}{{I}_{\left(020\right)}}$ | α (nm⁻¹) | Tap density (g/cm³) |
|---|---|---|---|---|---|
| Example 1 | 1.21 | 60.6 | 0.3709 | 0.7406 | 1.04 |
| Example 2 | 1.63 | 63.2 | 0.3963 | 1.0221 | 1.06 |
| Example 3 | 2.23 | 70.4 | 0.3566 | 1.1296 | 1.08 |
| Example 4 | 1.10 | 61.8 | 0.3895 | 0.6933 | 1.05 |
| Example 5 | 2.19 | 56.5 | 0.3576 | 1.3861 | 0.99 |
| Example 6 | 1.53 | 62.9 | 0.3942 | 0.9589 | 1.07 |
| Example 7 | 1.09 | 58.3 | 0.3550 | 0.6637 | 1.02 |
| Example 8 | 3.52 | 41.7 | 0.3556 | 3.0017 | 0.96 |
| Example 9 | 0.39 | 78.9 | 0.4019 | 0.1987 | 1.12 |
| Example 10 | 1.95 | 62.4 | 0.3902 | 1.2194 | 1.09 |
| Example 11 | 2.26 | 47.1 | 0.3607 | 1.7307 | 0.94 |
| Example 12 | 1.59 | 61.3 | 0.2743 | 0.7115 | 0.89 |
| Example 13 | 0.72 | 83.4 | 0.3880 | 0.3350 | 1.16 |
| Example 14 | 1.54 | 62.2 | 0.3335 | 0.8257 | 1.01 |
| Comparative Example 1 | 6.49 | 58.7 | 0.4779 | 5.2838 | 0.90 |
| Comparative Example 2 | 5.71 | 42.1 | 0.3861 | 5.2367 | 0.83 |
| Comparative Example 3 | 0.61 | 64.8 | 0.1551 | 0.1460 | 0.72 |
| Comparative Example 4 | 4.78 | 44.9 | 0.4334 | 4.6139 | 0.88 |

**Table 2 Electrochemical Performance Test Results of Different Examples and Comparative Examples**

| Experiment Nos. | Specific discharge capacity (mAh/g) | | | | 5 C/1 C (%) | Low-temperature capacity retention rate at 1 C (%) | Growth rate of potential difference value between redox peaks at [-15 °C] (%) | |
|---|---|---|---|---|---|---|---|---|
| | 0.1 C | 1 C | 3 C | 5 C | | | T₁ | T₂ |
| Example 1 | 162.65 | 153.63 | 142.78 | 131.35 | 85.50 | 90.74 | 0.242 | 0.173 |
| Example 2 | 161.84 | 150.96 | 140.47 | 128.21 | 84.93 | 89.29 | 0.255 | 0.180 |
| Example 3 | 162.95 | 152.85 | 140.75 | 126.73 | 82.91 | 86.35 | 0.294 | 0.211 |
| Example 4 | 160.04 | 151.72 | 141.09 | 130.81 | 86.22 | 90.41 | 0.237 | 0.162 |
| Example 5 | 161.23 | 151.97 | 140.34 | 127.43 | 83.85 | 88.03 | 0.279 | 0.188 |
| Example 6 | 163.37 | 153.77 | 142.66 | 129.20 | 84.02 | 88.95 | 0.250 | 0.178 |
| Example 7 | 161.84 | 151.32 | 139.89 | 128.66 | 85.03 | 91.06 | 0.229 | 0.154 |
| Example 8 | 160.22 | 150.60 | 138.55 | 123.80 | 82.20 | 85.49 | 0.341 | 0.258 |
| Example 9 | 160.28 | 152.15 | 142.03 | 126.97 | 83.45 | 88.45 | 0.266 | 0.197 |
| Example 10 | 160.75 | 152.02 | 141.26 | 126.45 | 83.18 | 86.37 | 0.280 | 0.202 |
| Example 11 | 159.44 | 148.72 | 136.97 | 124.93 | 84.00 | 87.59 | 0.274 | 0.193 |
| Example 12 | 157.07 | 148.70 | 138.47 | 125.61 | 84.47 | 90.03 | 0.239 | 0.164 |
| Example 13 | 163.47 | 151.68 | 139.75 | 125.87 | 82.98 | 86.91 | 0.273 | 0.208 |
| Example 14 | 159.51 | 148.92 | 135.83 | 125.59 | 84.33 | 89.67 | 0.245 | 0.173 |
| Comparative Example 1 | 155.06 | 141.23 | 125.69 | 101.28 | 71.71 | 76.25 | 0.458 | 0.467 |
| Comparative Example 2 | 158.12 | 144.67 | 129.45 | 106.93 | 73.91 | 78.37 | 0.409 | 0.343 |
| Comparative Example 3 | 151.46 | 141.59 | 128.86 | 112.57 | 79.50 | 83.79 | 0.387 | 0.306 |
| Comparative Example 4 | 157.25 | 143.98 | 125.67 | 109.12 | 75.79 | 80.74 | 0.369 | 0.310 |

Based on Tables 1 and 2, it can be seen that when the crystal structure parameter α is between 0.15 nm⁻¹ and 4.5 nm⁻¹, the lithium iron phosphate cathode material has good electrode reaction kinetics, that is, the reaction activation energy required for deintercalation and intercalation of lithium ions is low, and the diffusion rate of lithium ions is fast. Consequently, it has a low growth rate of potential difference value between redox peaks at different scanning rates at low temperature (-15 °C), and the corresponding lithium-ion battery exhibits both excellent rate performance and low-temperature performance. Further, when the crystal structure parameter α is between 0.5 nm⁻¹ and 1.1 nm⁻¹, the growth rate of potential difference value between redox peaks at low temperature (-15 °C) is smaller, and the rate performance and low-temperature performance of the corresponding lithium-ion battery are further improved.

By comparing Examples 2, 4, and 10, it can be seen that these three Examples have similar D₍₀₂₀₎ and $\frac{{I}_{\left(200\right)}}{{I}_{\left(020\right)}}$ values. However, Example 10 has the highest Fe_{Li} (1.95%), while Examples 2 and 4 have Fe_{Li} values of 1.63% and 1.1%, respectively. In the case where D₍₀₂₀₎ values are similar, a lower Fe_{Li} indicates less hindrance to the diffusion channels of lithium ions, and vice versa. In Examples 2, 4, and 10, Example 4 has the smallest Fe_{Li}, and an α value of 0.6933 nm⁻¹, indicating better lithium-ion diffusion, and lithium ions can also be fully and rapidly transported at 5 C rate and low temperature, resulting in excellent rate performance (5 C/1 C: 86.22%), low-temperature capacity retention rate, and low growth rate of potential difference value between redox peaks (low polarization degree). From the experimental data, it can be seen that as Fe_{Li} increases, α also increases, and the rate performance and low-temperature performance of the lithium-ion battery decrease, while the polarization degree increases.

By comparing Examples 3, 5, and 11, it can be seen that these three Examples have similar Fe_{Li} and $\frac{{I}_{\left(200\right)}}{{I}_{\left(020\right)}}$ values, but there are significant differences in D₍₀₂₀₎, that is, Example 11 has the smallest D₍₀₂₀₎, which is 47.1 nm, while Examples 3 and 5 have D₍₀₂₀₎ values of 70.4 nm and 56.5 nm, respectively. In the case where Fe_{Li} and $\frac{{I}_{\left(200\right)}}{{I}_{\left(020\right)}}$ values are similar, as D₍₀₂₀₎ increases, α decreases, and the discharge specific capacities of the lithium iron phosphate cathode material increase sequentially at 0.1 C. This is because D₍₀₂₀₎ will affect the crystallite size of the material, the larger the D₍₀₂₀₎, the larger the crystallite size of the material, thereby increasing the tap density of the material, which is conducive to increasing the specific capacity. However, the increase in D₍₀₂₀₎ will also make the lithium-ion diffusion channel become longer, which will have adverse effects on the rate performance and the low-temperature performance. Therefore, the rate performance and low-temperature capacity retention rate of Example 3 are both lower than those of Example 5, while the growth rate of potential difference value between redox peaks is higher than that of Example 5. In contrast, although Example 11 has the smallest D₍₀₂₀₎, its Fe_{Li} is similar to that of Example 5, resulting in a greater degree of hinderance per unit D₍₀₂₀₎ size. Consequently, Example 11 and Example 5 exhibit similar rate capability, low-temperature performance, and polarization degree.

By comparing Examples 6, 12, and 14, it can be seen that these three Examples have similar Fe_{Li} and D₍₀₂₀₎ values, indicating that their lithium-ion diffusion channels not only have comparable lengths but also experience similar degrees of hinderance. However, there are significant differences in $\frac{{I}_{\left(200\right)}}{{I}_{\left(020\right)}}$ values among the three Examples. A smaller $\frac{{I}_{\left(200\right)}}{{I}_{\left(020\right)}}$ value indicates a higher preferred crystal orientation degree of the lithium iron phosphate cathode material, and thus the morphology of the lithium iron phosphate cathode material tends to be plate-like or even flake-like, resulting in decreased tap density and consequently reduced discharge specific capacity, but with relatively small impact on low-temperature performance, rate performance, and polarization degree.

Both $\frac{{I}_{\left(200\right)}}{{I}_{\left(020\right)}}$ and D₍₀₂₀₎ of Comparative Example 2 are within the range set in the present disclosure, but the Fe_{Li} of Comparative Example 2 is larger, resulting in an increase in the crystal structure parameter α to 5.2367 nm⁻¹. Although Comparative Example 2 has a shorter lithium-ion diffusion channel (42.1 nm), the too large Fe_{Li} increases the degrees of hinderance of the lithium-ion diffusion channel, which in turn affects the electrochemical performance of the lithium-ion battery.

The crystal structure parameter α of Comparative Example 3 is 0.1460 nm⁻¹, which exceeds the reasonable range set in the present disclosure. It can be seen from the Tables that Comparative Example 3 has a lower Fe_{Li} value (0.62%) and a shorter lithium-ion diffusion channel (64.8 nm), but a too low $\frac{{I}_{\left(200\right)}}{{I}_{\left(020\right)}}$ value causes the lithium iron phosphate cathode material to exhibit a flake-like morphology, leading to the lowest tap density of the material and thus the lowest specific discharge capacity at 0.1 C.

Although Fe_{Li}, D₍₀₂₀₎, and $\frac{{I}_{\left(200\right)}}{{I}_{\left(020\right)}}$ value of Comparative Example 4 are all within the range set in the present disclosure, since the crystal structure parameter α is 4.6139 nm⁻¹, which exceeds the reasonable range set in the present disclosure, the excellent rate performance, low-temperature performance, and polarization degree cannot be achieved either.

Adjusting the reaction parameters of steps S1 and S2 enables regulating the crystal structure of the lithium iron phosphate cathode material, thereby regulating the crystal structure parameter α to affect the physical and electrochemical performances of the lithium iron phosphate cathode material. Specifically, in step S1, preparing an iron source carrier with different slow-release properties can affect the crystal structure of the lithium iron phosphate cathode material. The content of any one of the macromolecule, the crystal form regulator and the metal salt in the first solution will affect the crosslinking state of the gel. A higher content indicates a greater crosslinking density in the gel, and the network structure of the gel will be tighter and more robust, and the mechanical strength will increase. The mechanical strength will affect the slow-release effect of the iron source carrier. The higher the mechanical strength, the slower the release of Fe²⁺ and crystal form regulator in the hydrothermal reaction, resulting in less Fe_{Li} and a higher $\frac{{I}_{\left(200\right)}}{{I}_{\left(020\right)}}$. Conversely, the lower the mechanical strength, the faster the release of Fe²⁺ and crystal form regulator in the hydrothermal reaction, resulting in more Fe_{Li} and a lower $\frac{{I}_{\left(200\right)}}{{I}_{\left(020\right)}}$.

The content of the crystal form regulator in the iron source carrier will also affect the morphology of the lithium iron phosphate cathode material. The higher the content of the crystal form regulator, the more readily the lithium iron phosphate cathode material undergoes preferred orientation, with the morphology tending to be plate-like or even flake-like, resulting in a decreased tap density of the lithium iron phosphate cathode material and consequently reduced specific discharge capacity of the corresponding lithium-ion battery. In addition, the concentration of the solution of the metal salt will also affect the release effect of the iron source carrier. When the gel is soaked in the solution of the metal salt for loading, the higher the concentration of the solution of the metal salt, the more Fe²⁺ loaded per unit volume of the gel, and the more Fe²⁺ released per unit time in the hydrothermal reaction, resulting in an excessively high local ion concentration and a faster reaction speed, with the crystal nucleation speed exceeding the growth speed, thereby reducing the crystallite size of D₍₀₂₀₎ and increasing the Fe_{Li} value.

In step S2, the pH of the hydrothermal reaction system will also affect the release of the iron source carrier, which in turn will affect the crystal structure of the lithium iron phosphate cathode material. When the pH of the hydrothermal reaction system is lower, the dissolution rate of the iron source carrier is faster, resulting in a higher Fe_{Li} value of the lithium iron phosphate cathode material. When the pH of the hydrothermal reaction system is higher, the dissolution rate of the iron source carrier is slower, resulting in a lower Fe_{Li} value of the lithium iron phosphate cathode material. Meanwhile, under higher pH conditions, the ion reaction rate is slower, favoring crystal growth, thereby resulting in an increase in crystallite size of D₍₀₂₀₎. In addition, due to the slow dissolution rate of the iron source carrier, a significant velocity difference is easily generated during the formation of lithium iron phosphate particles, resulting in a natural grading effect, which makes the lithium iron phosphate cathode material have higher tap density and higher specific discharge capacity.

## Claims

1. A lithium iron phosphate cathode material, comprising a lithium iron phosphate matrix and a carbon coating layer located on a surface of the lithium iron phosphate matrix, wherein the lithium iron phosphate cathode material has a crystal structure parameter of $α = \frac{{Fe}_{Li}}{{D}_{\left(020\right)}} \times \frac{{I}_{\left(200\right)}}{{I}_{\left(020\right)}} \times 10000$, expressed in nm⁻¹, and α satisfies 0.15 nm⁻¹≤α≤4.5 nm⁻¹;
wherein Fe_{Li} represents a percentage of iron-lithium antisite defect in the lithium iron phosphate cathode material;
D₍₀₂₀₎ represents a crystallite size of a (020) crystal plane of the lithium iron phosphate cathode material, expressed in nm;
I₍₂₀₀₎ represents a peak intensity of a (200) characteristic diffraction peak in an X-ray diffraction pattern of the lithium iron phosphate cathode material; and
I₍₀₂₀₎ represents a peak intensity of a (020) characteristic diffraction peak in the X-ray diffraction pattern of the lithium iron phosphate cathode material.

2. The lithium iron phosphate cathode material of claim 1, wherein the lithium iron phosphate cathode material satisfies at least one of the following features (1) to (4):
feature (1): the crystal structure parameter α of the lithium iron phosphate cathode material satisfies 0.5 nm⁻¹≤α≤1.1 nm⁻¹;
feature (2): the Fe_{Li} of the lithium iron phosphate cathode material is ≤5%;
feature (3): a value of D₍₀₂₀₎ for the lithium iron phosphate cathode material is in a range of 35 nm to 85 nm; and
feature (4): a value of $\frac{{I}_{\left(200\right)}}{{I}_{\left(020\right)}}$ for the lithium iron phosphate cathode material is in a range of 0.25 to 0.45.

3. The lithium iron phosphate cathode material of claim 1 or 2, wherein the lithium iron phosphate matrix has a general structural formula of Li₁₋ₓJₓFe_{1-y}M_{y}(PO_{4-z})Q_{z};
wherein J is at least one selected from the group consisting of Na and Mg;
M is at least one selected from the group consisting of Al, Ni, Co, Mn, Ti, La, Ce, Cr, Mo, Ca, Ga, V, Nb, Zr, In, Zn and Y;
Q is at least one selected from the group consisting of F, S, N and Cl; and
0≤x≤0.1, 0≤y≤0.1 and 0≤z≤0.1.

4. A preparation method of the lithium iron phosphate cathode material of any one of claims 1 to 3, comprising the following steps:
mixing a crystal form regulator and a metal salt in a macromolecular solution to form a first solution, and adjusting a pH of the first solution to obtain a gel;
soaking the gel in a solution of the metal salt to obtain an iron source carrier;
mixing the iron source carrier, a lithium source, and a phosphorus source in water to obtain a mixture;
subjecting the mixture to a hydrothermal reaction, followed by solid-liquid separation to obtain a lithium iron phosphate precursor; and
mixing the lithium iron phosphate precursor with a carbon source, followed by calcination under an inert atmosphere to obtain the lithium iron phosphate cathode material.

5. The preparation method of claim 4, wherein the metal salt comprises an iron salt and an M salt, and a molar ratio of an iron element in the iron salt to an element M in the M salt is 1:0-0.11;
the iron salt is a soluble salt of divalent iron and comprises at least one selected from the group consisting of ferrous sulfate, ferrous chloride, ferrous nitrate, ferrous oxalate, and ferrous acetate; and
the M salt is a water-soluble salt of the element M, and the element M comprises at least one selected from the group consisting of Al, Ni, Co, Mn, Ti, La, Ce, Cr, Mo, Ca, Ga, V, Nb, Zr, In, Zn and Y.

6. The preparation method of claim 4 or 5, wherein a process of preparing the iron source carrier satisfies at least one of the following features (5) to (11):
feature (5): a mass percentage of the macromolecule in the first solution is 1 wt% to 30 wt%;
feature (6): a mass ratio of the macromolecule, the crystal form regulator and the metal salt in the first solution is 1:0.05-0.3:0.05-0.5;
feature (7): the macromolecule comprises at least one selected from the group consisting of chitosan, carboxymethyl chitosan, tannic acid, gelatin, and aminoethyl-β-cyclodextrin; and the crystal form regulator comprises at least one selected from the group consisting of ethylene glycol, polyethylene glycol, polyvinyl alcohol, polyvinylpyrrolidone, and diethylene glycol;
feature (8): adjusting the pH of the first solution refers to adjusting the pH of the first solution to 7.0-7.5;
feature (9): divalent iron ions in the solution of the metal salt have a concentration of 0.1 mol/L to 1.0 mol/L;
feature (10): a solid-to-liquid ratio of the gel to the solution of the metal salt is 1g:100 mL-500 mL; and the soaking is conducted for 10 min to 30 min; and
feature (11): the first solution and/or the solution of the metal salt further comprises an antioxidant; the antioxidant comprises ascorbic acid; and a molar ratio of the antioxidant to the iron element in the first solution and/or the solution of the metal salt is 0.1-0.3:1.

7. The preparation method of claim 4 or 5, wherein the preparation method satisfies at least one of the following features (12) to (15):
feature (12): the lithium source comprises at least one selected from the group consisting of lithium hydroxide, lithium chloride, and lithium acetate; and the lithium source in the mixture has a concentration of 0.8 mol/L to 2.5 mol/L;
feature (13): the mixture further comprises a doping source, the doping source comprises a metal doping source and/or a non-metal doping source; the metal doping source is a J source, which is a water-soluble compound containing at least one element selected from the group consisting of Na and Mg; and the non-metal doping source is a Q source, which is a water-soluble compound containing at least one element selected from the group consisting of F, S, N, and Cl;
feature (14): the mixture has a pH of 2.0 to 6.0;
feature (15): the hydrothermal reaction is conducted at a temperature of 140 °C to 240 °C for 5 h to 20 h.

8. The preparation method of claim 4 or 5, wherein the preparation method satisfies at least one of the following features (16) to (18):
feature (16): the carbon source comprises at least one selected from the group consisting of sucrose, glucose, starch, polyethylene glycol, phenolic resin, cellulose, and citric acid; and a mass of the carbon source is 0.1% to 3% of a mass of the lithium iron phosphate precursor;
feature (17): the inert atmosphere comprises at least one selected from the group consisting of nitrogen, helium, and argon; and
feature (18): the calcination is conducted at a temperature of 500 °C to 800 °C for 4 h to 14 h.

9. A cathode sheet, comprising the lithium iron phosphate cathode material of any one of claims 1 to 3 or a lithium iron phosphate cathode material obtained by the preparation method of any one of claims 4 to 8.

10. A lithium-ion battery, comprising the cathode sheet of claim 9.
